# EUROPÄISCHE PATENTANMELDUNG

(11) **EP 4 295 992 A1**
(43) Veröffentlichungstag der Anmeldung: **27.12.2023**
(21) Anmeldenummer: 23179328.2
(22) Anmeldetag: 14.06.2023
(51) Int. Cl.: B23P 11/02, B23Q 11/10

(54) **SCHRUMPFSPANNABKÜHLVORRICHTUNG, KÜHLSTATION UND VERFAHREN**

(30) Priorität: 21.06.2022 DE 102022115424
(71) Anmelder: E. Zoller GmbH & Co. KG Einstell- und Messgeräte, 74385 Pleidelsheim (DE)
(72) Erfinder: Zoller, Alexander, 74385 Pleidelsheim (DE)
(74) Vertreter: Daub, Thomas

(57) **Zusammenfassung**

Die Erfindung geht aus von einer Schrumpfspannabkühlvorrichtung (36) zu einer Kühlung von, insbesondere zuvor aufgeheizten, Werkzeugaufnahmen (10), mit zumindest einem Kühlelement (12), welches einen Kühlbereich (14) zu einer Herstellung eines wärmeleitenden Kontakts mit der zu kühlenden Werkzeugaufnahme (10) ausbildet.

Es wird vorgeschlagen, dass das Kühlelement (12) einen Kontaktschalter (16) aufweist, welcher dazu vorgesehen ist, zumindest ein Einlagern, und insbesondere eine Präsenz und/oder ein Auslagern, der zu kühlenden Werkzeugaufnahme (10) in den Kühlbereich (14) zu detektieren

## Beschreibung

### Stand der Technik

Die Erfindung betrifft eine Schrumpfspannabkühlvorrichtung nach dem Oberbegriff des Anspruchs 1, eine Kühlstation für ein Schrumpfspanngerät nach dem Anspruch 16 und ein Verfahren nach dem Oberbegriff des Anspruchs 17.

Es ist bereits eine Schrumpfspannabkühlvorrichtung zu einer Kühlung von zuvor aufgeheizten Werkzeugaufnahmen mit zumindest einem Kühlelement, welches einen Kühlbereich zu einer Herstellung eines wärmeleitenden Kontakts mit der zu kühlenden Werkzeugaufnahme ausbildet, vorgeschlagen worden.

Die Aufgabe der Erfindung besteht insbesondere darin, eine gattungsgemäße Vorrichtung mit vorteilhaften Eigenschaften hinsichtlich eines Kühlvorgangs an Warmschrumpffuttern bereitzustellen. Die Aufgabe wird erfindungsgemäß durch die Merkmale der Patentansprüche 1, 16 und 17 gelöst, während vorteilhafte Ausgestaltungen und Weiterbildungen der Erfindung den Unteransprüchen entnommen werden können.

### Vorteile der Erfindung

Die Erfindung geht aus von einer Schrumpfspannabkühlvorrichtung zu einer Kühlung von, insbesondere zuvor aufgeheizten, Werkzeugaufnahmen, mit zumindest einem Kühlelement, welches einen Kühlbereich zu einer Herstellung eines wärmeleitenden Kontakts mit der zu kühlenden Werkzeugaufnahme ausbildet.

Es wird vorgeschlagen, dass das Kühlelement einen Kontaktschalter aufweist, welcher dazu vorgesehen ist, zumindest ein Einlagern, und insbesondere eine Präsenz und/oder ein Auslagern, der zu kühlenden Werkzeugaufnahme in den Kühlbereich zu detektieren. Dadurch kann vorteilhaft ein Kühlvorgang für Warmschrumpffutter verbessert werden. Vorteilhaft kann eine hohe Benutzerfreundlichkeit erreicht werden, insbesondere indem kein manuelles Bestätigen eines Einsetzens der Werkzeugaufnahme in die Schrumpfspannabkühlvorrichtung erforderlich ist. Vorteilhaft kann eine hohe Betriebssicherheit erreicht werden, insbesondere indem ein verspätetes Aktivieren oder ein Vergessen eines Aktivierens des Kühlvorgangs vermieden werden kann. Dadurch kann zudem auch eine Genauigkeit einer anschließenden Werkzeugvermessung erhöht werden, insbesondere indem vermieden werden kann, dass eine Werkzeugaufnahme mit einem montierten Werkzeug zu lange oder zu kurz gekühlt wird und dadurch bei der Werkzeugvermessung zu kalt oder zu warm ist, so dass eine an die Werkzeugvermessung anschließende thermische Längenänderung das Messergebnis verfälscht. Dadurch kann vorteilhaft eine Prozesssicherheit des Schrumpfspann- und Werkzeugmessablaufs erhöht werden. Zudem kann vorteilhaft eine Taktzeit, insbesondere ein Durchsatz, optimiert werden.

Die Schrumpfspannabkühlvorrichtung ist insbesondere dazu vorgesehen, eine Temperatur einer Werkzeugaufnahme, insbesondere eines Warmschrumpffutters und/oder einer Spannzange, zu senken, vorzugsweise einer Zimmertemperatur (etwa 25°C) anzunähern. Dabei kann die Werkzeugaufnahme zuvor durch eine Induktionsheizvorrichtung, beispielsweise eine Induktionsspule, in dem Aufheizschritt des Werkzeug-Schrumpfspannverfahrens aufgeheizt worden sein. Alternativ oder zusätzlich kann dabei das Werkzeug oder die Spannzange in einem Dampfreinigungsschritt durch heißen Dampf aufgewärmt worden sein. Unter einer "Werkzeugaufnahme" soll insbesondere ein Bauteil verstanden werden, welches zu einer Aufnahme eines Werkzeugs, insbesondere eines Schafts eines Schaftwerkzeugs, und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Warmschrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Insbesondere ist das Kühlelement als ein Kontaktkühlelement, beispielsweise als eine Kühlglocke oder als eine Kühlmanschette ausgebildet. Insbesondere ist das Kühlelement dazu vorgesehen, einen wärmeleitenden Berührungskontakt zumindest zu einem Spannbereich der Werkzeugaufnahme, insbesondere des Warmschrumpffutters, herzustellen. Insbesondere ist das Kühlelement auf die Werkzeugaufnahme, insbesondere auf den Spannbereich des Warmschrumpffutters, aufsetzbar. Insbesondere ist das Kühlelement aktiv gekühlt, beispielsweise durch ein das Kühlelement durchströmendes Kühlfluid. Insbesondere ist das Kühlelement von einem Kühlfluid durchströmt, welches dazu vorgesehen ist, die über den wärmeleitenden Kontakt von der Werkzeugaufnahme, insbesondere von dem Warmschrumpffutter, aufgenommene Wärme abzuführen.

Der Kontaktschalter ist insbesondere als ein Mikroschalter ausgebildet. Der Kontaktschalter ist insbesondere dazu vorgesehen, durch ein in-Kontakt-Kommen mit dem Werkzeugfutter, beispielsweise mit dem Spannbereich des Warmschrumpffutters, (ein-)geschaltet zu werden. Der Kontaktschalter ist insbesondere dazu vorgesehen, durch ein Trennen eines Kontakts mit dem Werkzeugfutter, beispielsweise von dem Spannbereich des Warmschrumpffutters, (aus-)geschaltet zu werden. Der Kontaktschalter ist insbesondere dazu vorgesehen, bei einem Bestehen eines Kontakts mit dem Werkzeugfutter, beispielsweise mit dem Spannbereich des Warmschrumpffutters, eingeschaltet zu bleiben. Insbesondere ist der Kontaktschalter dazu vorgesehen, durch das Einlagern der zu kühlenden Werkzeugaufnahme ausgelenkt zu werden. Insbesondere ist der Kontaktschalter dazu vorgesehen, bei einem Auslagern der Werkzeugaufnahme sich selbsttätig in eine erneut auslenkbare Position rückauszulenken. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Kontaktschalter innerhalb des Kühlbereichs angeordnet ist. Dadurch kann vorteilhaft eine einfache Konstruktion und/oder eine einfache direkte Schaltung des Kontaktschalters durch die Werkzeugaufnahme ermöglicht werden. Zudem kann vorteilhaft eine Fehldetektion von Werkzeugaufnahmen möglichst verhindert werden. Insbesondere ragt der Kontaktschalter über eine Kühlkontaktfläche des Kühlelements, insbesondere des Kontaktkühlelements, hervor. Insbesondere ist der Kontaktschalter von der Kühlkontaktfläche des Kühlelements, insbesondere des Kontaktkühlelements, vorzugsweise zumindest in Umfangsrichtung vollständig, umgeben.

Zudem wird vorgeschlagen, dass der Kontaktschalter zumindest in einem unbetätigten Zustand aus einer den Kühlbereich begrenzenden Wand des Kühlelements, insbesondere aus der Kühlkontaktfläche, zumindest teilweise herausragt. Dadurch kann vorteilhaft eine zuverlässige und/oder einfache direkte Schaltung des Kontaktschalters durch die Werkzeugaufnahme ermöglicht werden. Insbesondere ragt der Kontaktschalter mindestens 0,5 mm, vorzugsweise mindestens 1 mm, vorteilhaft mindestens 2 mm, bevorzugt mindestens 3 mm und besonders bevorzugt höchstens 10 mm aus der den Kühlbereich begrenzenden Wand des Kühlelements, insbesondere aus der Kühlkontaktfläche, hervor. Insbesondere ragt zumindest 3 %, vorzugsweise zumindest 5 % und bevorzugt höchstens 15 % einer Gesamterstreckung des Kontaktschalters senkrecht zu der umgebenden Kühlkontaktfläche der Kühlkontaktfläche hervor. Insbesondere ist der Kontaktschalter in einem betätigten Zustand vollständig in der den Kühlbereich begrenzenden Wand des Kühlelements, insbesondere in der Kühlkontaktfläche, versenkt.

Zusätzlich wird vorgeschlagen, dass der Kühlbereich als ein zumindest in Radialrichtung des Kühlelements vollständig von dem Kühlelement umschlossener Kühlraum ausgebildet ist, welcher insbesondere dazu vorgesehen ist, einen Spannbereich der als Warmschrumpffutter ausgebildeten Werkzeugaufnahme zumindest zu einem Großteil, vorzugsweise vollständig aufzunehmen. Dadurch kann vorteilhaft eine gleichmäßige und/oder effektive Kontaktkühlung erreicht werden. Insbesondere wird die Werkzeugaufnahme zu einem Kühlen in Axialrichtung, insbesondere in eine senkrecht zu der Radialrichtung verlaufende Richtung, teilweise in den Kühlraum eingeführt. Insbesondere wird zumindest ein Spannbereich des Warmschrumpffutters zu dem Kühlen in den Kühlraum eingeführt. Insbesondere kontaktiert die Kühlkontaktfläche zumindest einen Großteil des Spannbereichs des Warmschrumpffutters, vorzugsweise den vollständigen Spannbereich des Warmschrumpffutters in dem Kühlraum.

Wenn eine aus der den Kühlbereich begrenzenden Wand des Kühlelements herausragende, insbesondere aus der Kühlkontaktfläche herausragende, Kontaktspitze des Kontaktschalters eine zumindest im Wesentlichen kalottenförmige, insbesondere kugelkalottenförmige oder kuppelförmige, Oberfläche aufweist, kann vorteilhaft ein zuverlässiges und/oder sicheres Einlagern der Werkzeugaufnahme gewährleistet werden. Vorteilhaft kann ein Risiko eines Verkantens der Werkzeugaufnahme, insbesondere mit dem Kontaktschalter und/oder einer Beschädigung, insbesondere der Werkzeugaufnahme und/oder des Kontaktschalters, minimiert werden. Insbesondere ist die Kontaktspitze des Kontaktschalters zumindest auf einer einer vorgesehenen Einführrichtung gegenüberliegenden Seite abgerundet. Unter einer "im Wesentlichen kalottenförmigen" Ausgestaltung soll in diesem Zusammenhang jegliche Ausgestaltung der Kontaktspitze des Kontaktschalters verstanden werden, bei der die Kontaktspitze des Kontaktschalters zumindest auf der der Einführrichtung gegenüberliegenden Seite abgerundet ist. Insbesondere ist die Kontaktspitze des Kontaktschalters derart ausgebildet, dass der Kontaktschalter bei einem Kontakt mit der Werkzeugaufnahme ohne Verkanten in eine Richtung schräg oder senkrecht zu einer Einführrichtung der Werkzeugaufnahme ausweicht.

Des Weiteren wird vorgeschlagen, dass der Kontaktschalter als ein mechanischer Schalter ausgebildet ist. Dadurch kann eine hohe Zuverlässigkeit, Sicherheit und/oder eine einfache Konstruktion erreicht werden. Insbesondere umfasst der mechanische Schalter zumindest ein beweglich gelagertes Schaltelement, welches durch die Einführung der Werkzeugaufnahme in den Kühlbereich aktuierbar ist.

Wenn der Kontaktschalter als ein elastisch vorgespannter Druckschalter ausgebildet ist, kann vorteilhaft eine selbsttätige Rückauslenkung ermöglicht werden. Vorteilhaft kann dadurch ein hoher Bedienerkomfort und/oder eine hohe Betriebssicherheit erreicht werden. Insbesondere ist der elastisch vorgespannte Druckschalter dazu vorgesehen, selbsttätig in einen Ausgangszustand (den unbetätigten Zustand) zurückzukehren.

Weiterhin wird vorgeschlagen, dass der Kontaktschalter zumindest eine den Kühlbereich begrenzende Wand, insbesondere eine innere Wandung des Kühlelements, vorzugsweise die Kühlkontaktfläche, in Radialrichtung durchdringt. Dadurch kann eine vorteilhafte Konstruktion erreicht werden. Insbesondere ist zudem denkbar, dass der Kontaktschalter das Kühlelement zu einem Großteil oder sogar vollständig durchdringt. Unter einem "Großteil" soll insbesondere zumindest 51 %, vorzugsweise zumindest 70%, bevorzugt zumindest 80% und besonders bevorzugt zumindest 90% verstanden werden.

Außerdem wird vorgeschlagen, dass die Schrumpfspannabkühlvorrichtung eine Steuereinheit aufweist, welche zumindest dazu vorgesehen ist, ein zumindest die Einlagerung einer Werkzeugaufnahme anzeigendes Einlagersignal des Kontaktschalters zu erfassen. Dadurch kann vorteilhaft ein hoher Bedienerkomfort und/oder eine hohe Betriebssicherheit, insbesondere durch einen hohen Automatisierungsgrad, erreicht werden. Das Einlagersignal kann als ein durch den Kontaktschalter ausgelöstes elektronisches Signal ausgebildet sein. Unter einer "Steuereinheit" soll insbesondere eine Einheit mit zumindest einer Steuerelektronik verstanden werden. Unter einer "Steuerelektronik" soll insbesondere eine Einheit mit einem Prozessor und mit einem Datenspeicher sowie mit einem in dem Datenspeicher gespeicherten Betriebsprogramm verstanden werden.

Wenn die Steuereinheit zumindest dazu vorgesehen ist, bei einem Empfang des Einlagersignals eine Zählung einer Kühlzeit zu starten und/oder wenn die Steuereinheit zumindest dazu vorgesehen ist, bei einem Empfang des Einlagersignals ein Herunterzählen einer in der Steuereinheit, insbesondere für die jeweilige Werkzeugaufnahme hinterlegten, Kühlzeit zu starten, und insbesondere die Herunterzählung der Kühlzeit an eine Anzeigeeinheit der Schrumpfspannabkühlvorrichtung oder einer Kühlstation mit der Schrumpfspannabkühlvorrichtung zur visuellen Ausgabe der Herunterzählung der Kühlzeit zu übermitteln, kann vorteilhaft ein Kühlvorgang optimiert werden. Vorteilhaft kann sichergestellt werden, dass eine optimale Kühlzeit erreicht wird. Dadurch kann eine hohe Messgenauigkeit einer an das Einschrumpfen anschließenden Werkzeugvermessung erreicht werden. Es ist denkbar, dass die Zählung der Kühlzeit und/oder die Herunterzählung der Kühlzeit visuell an einen Bediener ausgegeben wird, beispielsweise über die mit der Steuereinheit verbundene Anzeigeeinheit, wie z.B. einem Monitor. Die Kühlzeit kann beispielsweise 30s, 40s, 50s, 1min oder ein anderes Zeitintervall betragen. Die Kühlzeit ist insbesondere auf die jeweilige zu kühlende Werkzeugaufnahme abgestimmt. Beispielsweise wird die jeweilige passende Kühlzeit manuell (durch Bedienereingabe) oder automatisiert (durch Werkzeugaufnahmeerkennung oder durch Auslesen von der Werkzeugaufnahme zugeordneten Daten) ausgewählt, wenn die Werkzeugaufnahme in die Schrumpfspannabkühlvorrichtung eingegeben wird.

Wenn zudem die Steuereinheit zumindest dazu vorgesehen ist, bei einem Empfang des Einlagersignals eine einen aktiven Kühlvorgang signalisierende Leuchtanzeige, insbesondere der Schrumpfspannabkühlvorrichtung, zu schalten, insbesondere zu aktivieren und/oder farblich umzuschalten, kann vorteilhaft ein hoher Benutzerkomfort erreicht werden. Vorteilhaft kann sichergestellt werden, dass eine optimale Kühlzeit erreicht wird. Vorteilhaft kann eine Taktzeit und/oder ein Durchlauf optimiert werden. Vorteilhaft kann eine Verletzungsgefahr durch ein Anfassen heißer Werkzeugaufnahmen verringert werden. Es ist denkbar, dass die Leuchtanzeige in dem Kühlelement verbaut ist und/oder in das Kühlelement integriert ist. Alternativ kann die Leuchtanzeige jedoch auch getrennt von dem Kühlelement angeordnet sein. Vorzugsweise ist die Leuchtanzeige dazu vorgesehen, zumindest einen Teilbereich des Kühlelements auszuleuchten. Dadurch kann vorteilhaft eine besonders gute Wahrnehmbarkeit erreicht werden. Beispielsweise kann ein grünes Licht der Leuchtanzeige eine Betriebsbereitschaft des Kühlelements signalisieren. Beispielsweise kann ein rotes Licht der Leuchtanzeige einen Abkühlbetrieb des Kühlelements signalisieren, insbesondere in welchem eine Endtemperatur der Werkzeugaufnahme noch nicht erreicht ist. Beispielsweise kann ein blaues Licht der Leuchtanzeige eine Beendigung des Kühlbetriebs signalisieren, in welchem das Kühlelement noch auf der Werkzeugaufnahme aufsitzt, jedoch die Endtemperatur der Werkzeugaufnahme bereits erreicht ist.

Wenn die Leuchtanzeige dazu vorgesehen ist, den aktiven Kühlvorgang, den beendigten Kühlvorgang und/oder den betriebsbereiten Zustand des Kühlelements durch eine Farbumschaltung zu signalisieren, kann vorteilhaft eine hohe Benutzerfreundlichkeit und/oder eine hohe Sicherheit durch eine Einfachheit der Erkennung von Warnsignalen erreicht werden.

Zudem wird vorgeschlagen, dass die Steuereinheit zumindest dazu vorgesehen ist, bei einem Empfang des Einlagersignals eine Kühlfunktion des Kühlelements, insbesondere einer Kühleinheit mit dem Kühlelement, beispielsweise einen Kühlfluidfluss, zu aktivieren. Dadurch kann vorteilhaft ein Kühlvorgang optimiert werden. Vorteilhaft kann sichergestellt werden, dass eine optimale Kühlzeit erreicht wird. Vorteilhaft kann eine hohe Taktzahl und/oder ein hoher Durchsatz erreicht werden.

Außerdem wird vorgeschlagen, dass die Steuereinheit zumindest dazu vorgesehen ist, nach einem Verstreichen der, insbesondere für die jeweilige Werkzeugaufnahme hinterlegten, Kühlzeit die den aktiven Kühlvorgang signalisierende Leuchtanzeige zu schalten, insbesondere zu deaktivieren und/oder farblich umzuschalten, und/oder die Kühlfunktion des Kühlelements, insbesondere der Kühleinheit mit dem Kühlelement, zu deaktivieren. Dadurch kann vorteilhaft ein Kühlvorgang optimiert werden. Vorteilhaft kann sichergestellt werden, dass eine optimale Kühlzeit erreicht wird. Vorteilhaft kann eine hohe Taktzahl und/oder ein hoher Durchsatz erreicht werden. Insbesondere umfasst die Kühleinheit zumindest das Kühlelement, einen Kühlfluidkreislauf und eine aktive Kühlung zur Kühlung des Kühlfluids.

Ferner wird die Kühlstation für ein Schrumpfspanngerät, insbesondere ein Schrumpfspanngerät, mit einer Schrumpfspannabkühlvorrichtung vorgeschlagen. Dadurch kann vorteilhaft ein Kühlvorgang für Warmschrumpffutter verbessert werden. Insbesondere kann die Kühlstation oder das Schrumpfspanngerät eine Mehrzahl an Schrumpfspannabkühlvorrichtungen und/oder an Kühlelementen mit Kontaktschaltern aufweisen. Es ist denkbar, dass bei der manuellen oder automatisierten Auswahl der Werkzeugaufnahme das jeweils passende Kühlelement mittels der Steuereinheit ausgewählt wird und die Auswahl durch die jeweilige Leuchtanzeige der jeweiligen Schrumpfspannabkühlvorrichtung oder des jeweiligen Kühlelements angezeigt wird, beispielsweise durch ein Blinken der Leuchtanzeige.

Des Weiteren wird ein Verfahren zum Betrieb der Schrumpfspannabkühlvorrichtung mit dem zumindest einen Kühlelement, welches den Kühlbereich zur Herstellung des wärmeleitenden Kontakts mit der zu kühlenden Werkzeugaufnahme ausbildet, wobei das Kühlelement den Kontaktschalter aufweist, mittels welchem zumindest das Einlagern, und insbesondere die Präsenz und/oder das Auslagern, der zu kühlenden Werkzeugaufnahme in den / in dem / aus dem Kühlbereich detektiert wird, vorgeschlagen. Dadurch kann vorteilhaft ein Kühlvorgang für Warmschrumpffutter verbessert werden.

Zudem wird vorgeschlagen, dass in Folge einer Detektion eines Einlagerns der zu kühlenden Werkzeugaufnahme in den Kühlbereich durch den Kontaktschalter zumindest das Herunterzählen der, insbesondere für die jeweilige Werkzeugaufnahme hinterlegten, Kühlzeit gestartet wird. Vorteilhaft kann dadurch sichergestellt werden, dass eine optimale Kühlzeit erreicht wird.

Die erfindungsgemäße Schrumpfspannabkühlvorrichtung, die erfindungsgemäße Kühlstation und das erfindungsgemäße Verfahren sollen hierbei nicht auf die oben beschriebene Anwendung und Ausführungsform beschränkt sein. Insbesondere kann die erfindungsgemäße Schrumpfspannabkühlvorrichtung, die erfindungsgemäße Kühlstation und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung einer Kühlstation für ein Schrumpfspanngerät mit einer Schrumpfspannabkühlvorrichtung,
- Fig. 2: eine schematische seitliche Schnittansicht der Schrumpfspannabkühlvorrichtung mit einem Kontaktschalter in einem unbetätigten Zustand,
- Fig. 3: eine weitere schematische seitliche Schnittansicht der Schrumpfspannabkühlvorrichtung mit dem Kontaktschalter in einem betätigten Zustand,
- Fig. 4: eine teilweise geschnittene Ansicht von oben auf die Schrumpfspannabkühlvorrichtung mit dem Kontaktschalter in dem unbetätigten Zustand und
- Fig. 5: ein schematisches Ablaufdiagramm eines Verfahrens zum Betrieb der Schrumpfspannabkühlvorrichtung.

### Beschreibung des Ausführungsbeispiels

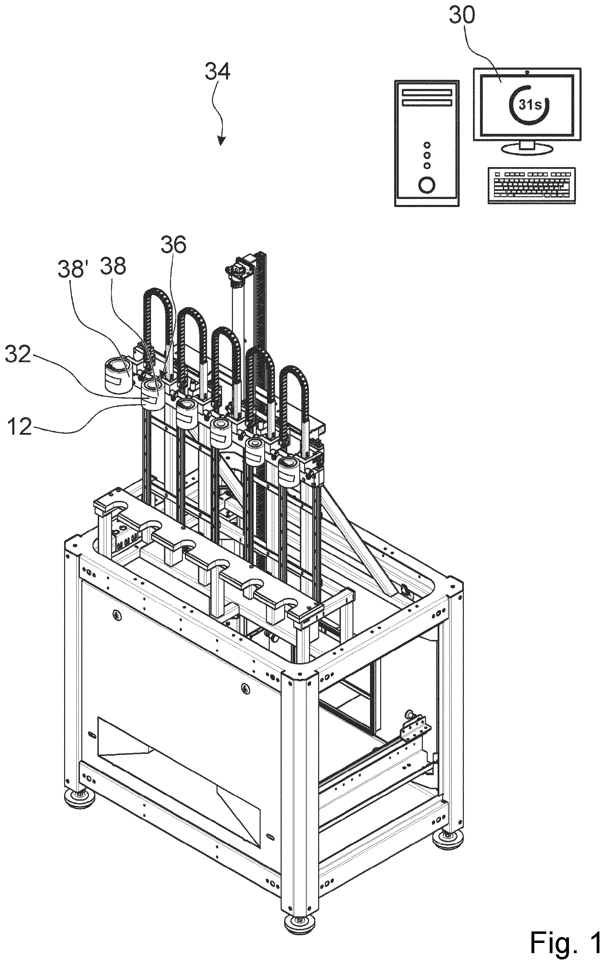

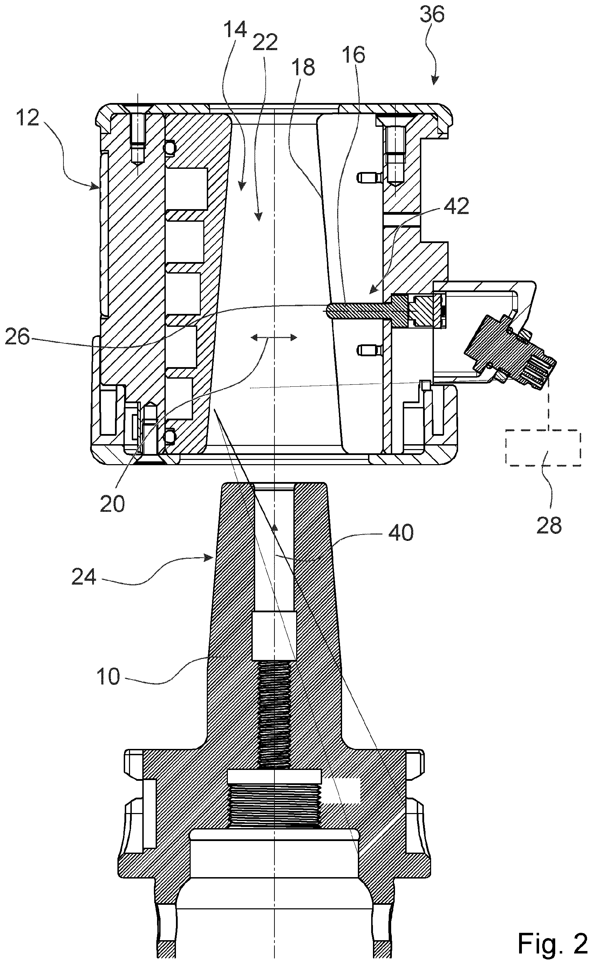

Die Fig. 1 zeigt schematisch eine perspektivische Darstellung einer beispielhaften Kühlstation 34 für ein Schrumpfspanngerät. Von der Darstellung der Fig. 1 abweichende Ausgestaltungen von Kühlstationen 34 sind selbstverständlich denkbar. Die Kühlstation 34 weist Schrumpfspannabkühlvorrichtungen 36 auf. Die Kühlstation 34 umfasst mehrere Kühlplätze 38, 38'. Die verschiedenen Kühlplätze 38, 38' sind für eine Kühlung von verschieden geformten und/oder verschieden großen Werkzeugaufnahmen 10 (siehe u.a. Fig. 2), insbesondere Warmschrumpffuttern, vorgesehen. Die Kühlstation 34 umfasst eine Anzeigeeinheit 30. Die Anzeigeeinheit 30 ist als ein Monitor ausgebildet. Die Anzeigeeinheit 30 ist zumindest zur Ausgabe und/oder Darstellung von Informationen, die die Schrumpfspannabkühlvorrichtung(en) 36 betreffen, vorgesehen. Die Kühlstation 34 kann manuell oder automatisiert, z.B. mittels eines Handhabungsroboters (nicht dargestellt) bedienbar sein. Die Kühlstation 34 kann in Kombination mit einer Schrumpfspannstation mit zumindest einer Induktionsheizeinheit (nicht dargestellt) oder separat von der Schrumpfspannstation ausgebildet sein.

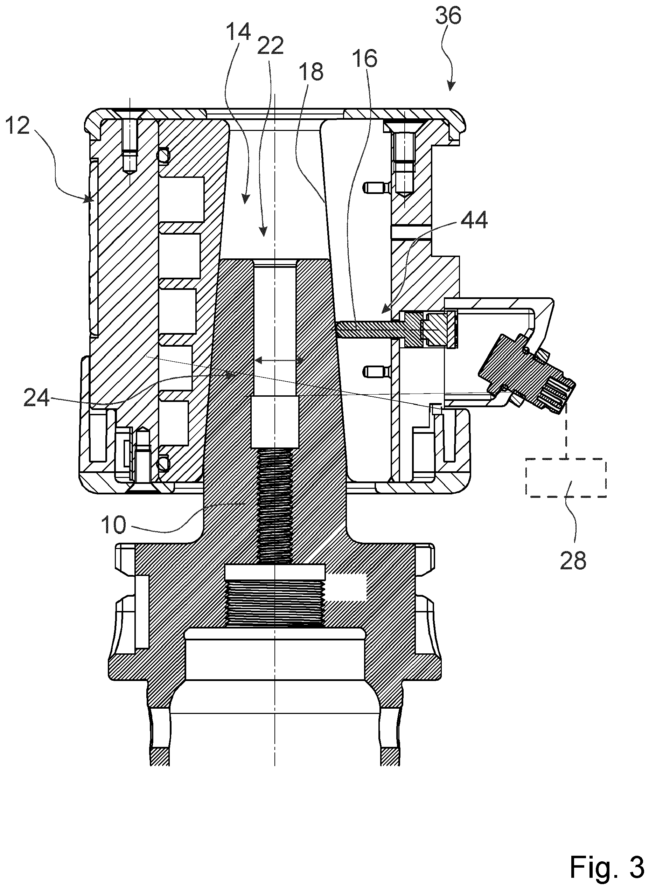

Die Fig. 2 zeigt eine schematische Schnittansicht der Schrumpfspannabkühlvorrichtung 36. Die Schrumpfspannabkühlvorrichtung 36 ist zu einer Kühlung der zuvor aufgeheizten Werkzeugaufnahmen 10 vorgesehen. Die Schrumpfspannabkühlvorrichtung 36 weist ein Kühlelement 12 auf. Das Kühlelement 12 ist als eine Kühlmanschette / Kühlglocke ausgebildet. Das Kühlelement 12 ist zu einer Durchströmung von einem Kühlfluid vorgesehen. Das Kühlelement 12 bildet einen Kühlbereich 14 aus. Der Kühlbereich 14 ist zu einer Herstellung eines wärmeleitenden Kontakts mit der zu kühlenden Werkzeugaufnahme 10 vorgesehen. Der Kühlbereich 14 ist als ein Kühlraum 22 ausgebildet. Der Kühlraum 22 ist in Radialrichtung 20 des Kühlelements 12 vollständig von dem Kühlelement 12 umschlossen. Der Kühlraum 22 ist von dem Kühlelement 12 ringförmig umschlossen. Der Kühlraum 22 ist dazu vorgesehen, einen Spannbereich 24 der als Warmschrumpffutter ausgebildeten Werkzeugaufnahme 10 vollständig aufzunehmen / zu umschließen (siehe auch Fig. 3). Die Werkzeugaufnahme 10 ist dazu vorgesehen, in einer Einführrichtung 40 in den Kühlraum 22 und/oder den Kühlbereich 14 des Kühlelements 12 eingeführt zu werden. Die Einführrichtung 40 verläuft senkrecht zu der Radialrichtung 20 des Kühlelements 12. Die Einführrichtung 40 verläuft parallel zu einer Axialrichtung des Kühlelements 12.

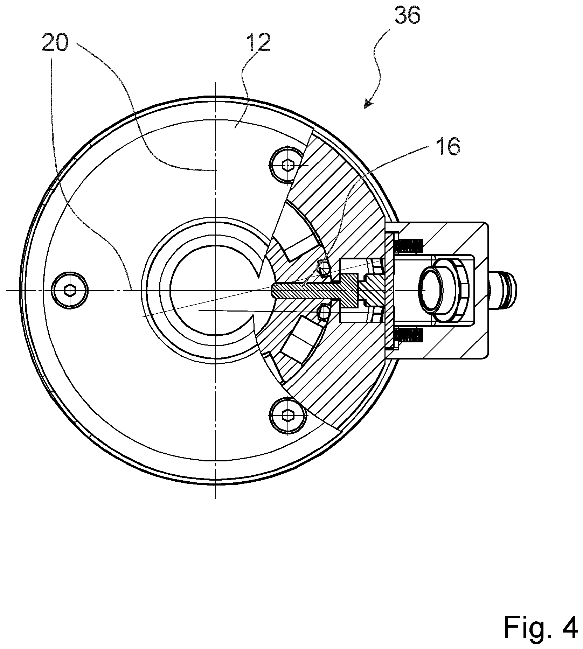

Das Kühlelement 12 weist einen Kontaktschalter 16 auf. In den Figuren 2 und 4 ist der Kontaktschalter 16 in einem unbetätigten Zustand 42 dargestellt. In der Figur 3 ist der Kontaktschalter 16 in einem betätigten Zustand 44 dargestellt. Der Kontaktschalter 16 ist dazu vorgesehen, ein Einlagern der zu kühlenden Werkzeugaufnahme 10 in den Kühlbereich 14 zu detektieren. Der Kontaktschalter 16 ist dazu vorgesehen, eine Präsenz der zu kühlenden Werkzeugaufnahme 10 in dem Kühlbereich 14 zu detektieren. Der Kontaktschalter 16 ist dazu vorgesehen, ein Auslagern der (gekühlten) Werkzeugaufnahme 10 aus dem Kühlbereich 14 zu detektieren. Der Kontaktschalter 16 ist als ein mechanischer Schalter ausgebildet. Der Kontaktschalter 16 ist als ein elastisch vorgespannter Druckschalter ausgebildet. Der Kontaktschalter 16 ist innerhalb des Kühlbereichs 14 angeordnet.

Der Kontaktschalter 16 ragt in dem unbetätigten Zustand 42 aus einer den Kühlbereich 14 begrenzenden Wand 18 des Kühlelements 12 zumindest teilweise heraus. Der Kontaktschalter 16 ragt in dem unbetätigten Zustand 42 in den Kühlraum 22 hinein. Der Kontaktschalter 16 ist in dem betätigten Zustand 44 in der den Kühlbereich 14 begrenzenden Wand 18 des Kühlelements 12 versenkt. Der Kontaktschalter 16 ist in dem betätigten Zustand 44 außerhalb des Kühlraums 22 angeordnet. Der Kontaktschalter 16 durchdringt, insbesondere in dem unbetätigten Zustand 42 und in dem betätigten Zustand 44 die den Kühlbereich 14 begrenzende Wand 18 des Kühlelements 12 in Radialrichtung 20. Der Kontaktschalter 16 weist eine Kontaktspitze 26 auf. Die Kontaktspitze 26 des Kontaktschalters 16 ragt in dem unbetätigten Zustand 42 aus der Wand 18 des Kühlelements 12 heraus. Die Kontaktspitze 26 des Kontaktschalters 16 weist eine abgerundete Oberfläche auf. Die Kontaktspitze 26 des Kontaktschalters 16 weist eine zumindest im Wesentlichen kalottenförmige Oberfläche auf. Der Kontaktschalter 16 ist dazu vorgesehen, bei einer Betätigung des Kontaktschalters 16, insbesondere bei einem Hineindrücken des Kontaktschalters 16 in die Wand 18 des Kühlelements 12, ein Einlagersignal auszugeben. Das Einlagersignal zeigt die Einlagerung einer Werkzeugaufnahme 10 in den Kühlbereich 14 an. Der Kontaktschalter 16 ist dazu vorgesehen, bei einem Freigeben des Kontaktschalters 16, insbesondere bei einem Herausfahren des Kontaktschalters 16 aus der Wand 18 des Kühlelements 12, ein Auslagersignal auszugeben. Das Auslagersignal zeigt die Auslagerung der Werkzeugaufnahme 10 aus dem Kühlbereich 14 an.

Die Schrumpfspannabkühlvorrichtung 36 weist eine Steuereinheit 28 auf. Die Steuereinheit 28 ist zumindest dazu vorgesehen, das die Einlagerung der Werkzeugaufnahme 10 anzeigende Einlagersignal des Kontaktschalters 16 zu erfassen. Die Steuereinheit 28 ist zumindest dazu vorgesehen, das die Auslagerung der Werkzeugaufnahme 10 anzeigende Auslagersignal des Kontaktschalters 16 zu erfassen. Die Steuereinheit 28 ist zumindest dazu vorgesehen, bei dem Empfang des Einlagersignals eine Zählung einer Kühlzeit zu starten. Die Steuereinheit 28 ist zumindest dazu vorgesehen, bei dem Empfang des Auslagersignals eine Zählung der Kühlzeit zu stoppen. Die Steuereinheit 28 ist zumindest dazu vorgesehen, bei dem Empfang des Einlagersignals ein Herunterzählen einer in der Steuereinheit 28 für die jeweilige Werkzeugaufnahme 10 hinterlegten Kühlzeit zu starten. Die Steuereinheit 28 ist zumindest dazu vorgesehen, die Herunterzählung der Kühlzeit an die Anzeigeeinheit 30 zur visuellen Ausgabe der Herunterzählung der Kühlzeit zu übermitteln.

Die Schrumpfspannabkühlvorrichtung 36 weist eine Leuchtanzeige 32 auf. Die Leuchtanzeige 32 kann durch ein oder mehrere LEDs, insbesondere Farbwechsel-LEDs gebildet sein. Die Leuchtanzeige 32 ist derart angeordnet, dass sie zumindest eine Oberfläche des Kühlelements 12 beleuchtet. Die Leuchtanzeige 32 ist in das Kühlelement 12 integriert. Die Leuchtanzeige 32 ist dazu vorgesehen, einen Betriebsstatus des zugehörigen Kühlelements 12 anzuzeigen. Die Leuchtanzeige 32 ist dazu vorgesehen, den Betriebsstatus des zugehörigen Kühlelements 12 durch eine Farbumschaltung zu signalisieren. Die Leuchtanzeige 32 ist dazu vorgesehen, zumindest die Betriebstatus "Betriebsbereit" (z.B. grün), "Kühlvorgang läuft" (z.B. rot) und "Kühlvorgang beendet" (z.B. blau) anzuzeigen. Die Steuereinheit 28 ist zumindest dazu vorgesehen, bei dem Empfang des Einlagersignals die Leuchtanzeige 32 derart zu schalten, dass ein aktiver Kühlvorgang signalisiert wird. Die Steuereinheit 28 ist zumindest dazu vorgesehen, bei dem Empfang des Auslagersignals die Leuchtanzeige 32 derart zu schalten, dass eine erneute Betriebsbereitschaft signalisiert wird. Die Steuereinheit 28 ist zumindest dazu vorgesehen, nach einem Verstreichen der für die jeweilige Werkzeugaufnahme 10 hinterlegten Kühlzeit die Leuchtanzeige 32 derart zu schalten, dass ein Ende des Kühlvorgangs signalisiert wird, z.B. durch eine Deaktivierung der Leuchtanzeige 32 oder durch ein farbliches Umschalten der Leuchtanzeige 32.

Die Steuereinheit 28 ist zumindest dazu vorgesehen, bei dem Empfang des Einlagersignals zudem die Kühlfunktion des Kühlelements 12, insbesondere ein aktives Kühlsystem einer Kühleinheit, an die das Kühlelement 12 angeschlossen ist, zu aktivieren. Die Steuereinheit 28 ist zumindest dazu vorgesehen, nach dem Verstreichen der für die jeweilige Werkzeugaufnahme 10 hinterlegten Kühlzeit die Kühlfunktion des Kühlelements 12 zu deaktivieren.

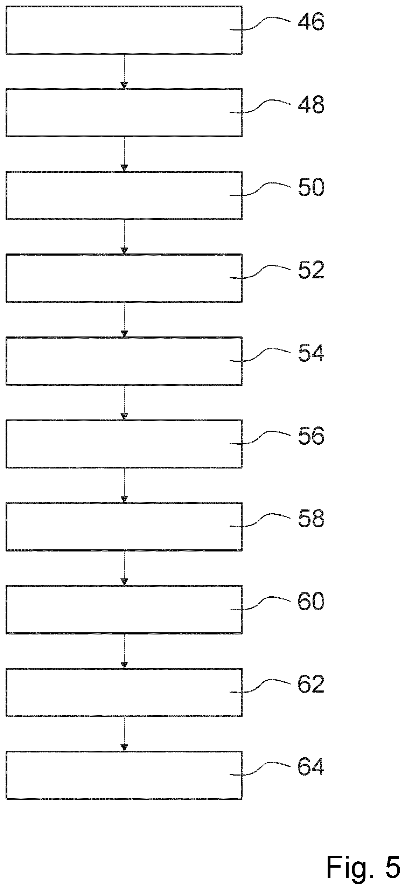

Die Fig. 5 zeigt ein schematisches Ablaufdiagramm eines Verfahrens zum Betrieb der Schrumpfspannabkühlvorrichtung 36. In zumindest einem Verfahrensschritt 46 wird eine Werkzeugaufnahme 10, insbesondere vor oder nach einem Aufheizen des Spannbereichs 24 zu einem Einschrumpfen oder zu einem Ausschrumpfen eines Werkzeugs in oder aus der Werkzeugaufnahme 10, identifiziert. In zumindest einem weiteren Verfahrensschritt 48 wird ein zu der identifizierten Werkzeugaufnahme 10 passendes Kühlelement 12 der Kühlstation 34 ausgewählt. Das passende Kühlelement 12 kann dies beispielsweise durch ein Blinken der dem Kühlelement 12 zugeordneten Leuchtanzeige 32 signalisieren. In zumindest einem weiteren Verfahrensschritt 50 wird das Kühlelement 12 auf die Werkzeugaufnahme 10 aufgesetzt. Dabei wird der Spannbereich 24 der Werkzeugaufnahme 10 in den Kühlbereich 14 des Kühlelements 12 entlang der Einführrichtung 40 eingeführt. In zumindest einem weiteren Verfahrensschritt 52 wird das Einlagern mittels des Kontaktschalters 16 detektiert. Dazu wird der Kontaktschalter 16 von einer Außenoberfläche der Werkzeugaufnahme 10 ausgelenkt und dadurch betätigt. Dabei wird der Kontaktschalter 16 aus dem Kühlbereich 14 herausgedrückt. Dabei wird der Kontaktschalter 16 in die Wand 18 des Kühlelements 12 hineingedrückt. Durch das Betätigen des Kontaktschalters 16 wird das Einlagersignal erzeugt. In zumindest einem weiteren Verfahrensschritt 54 wird in Folge der Detektion des Einlagerns der zu kühlenden Werkzeugaufnahme 10 in den Kühlbereich 14 durch den Kontaktschalter 16 das Herunterzählen der für die jeweilige identifizierte Werkzeugaufnahme 10 hinterlegten (charakteristischen) Kühlzeit gestartet. In zumindest einem weiteren Verfahrensschritt 56 wird in Folge der Detektion des Einlagerns der zu kühlenden Werkzeugaufnahme 10 in den Kühlbereich 14 durch den Kontaktschalter 16 die Leuchtanzeige 32 aktiviert und/oder zu einer den aktiven Kühlvorgang signalisierenden Farbe umgeschaltet. In zumindest einem weiteren Verfahrensschritt 58 wird in Folge der Detektion des Einlagerns der zu kühlenden Werkzeugaufnahme 10 in den Kühlbereich 14 durch den Kontaktschalter 16 die aktive Kühlung des Kühlelements 12 aktiviert. In zumindest einem weiteren Verfahrensschritt 60 wird nach dem Herunterzählen der Kühlzeit die Leuchtanzeige 32 deaktiviert und/oder zu einer den beendeten Kühlvorgang signalisierenden Farbe umgeschaltet. In zumindest einem weiteren Verfahrensschritt 62 wird nach dem Herunterzählen der Kühlzeit die aktive Kühlung des Kühlelements 12 deaktiviert. In zumindest einem weiteren Verfahrensschritt 64 wird das Kühlelement 12 von der nun abgekühlten Werkzeugaufnahme 10 entfernt. Dabei kehrt der Kontaktschalter 16 in den unbetätigten Zustand 42 zurück, woraufhin beispielsweise die Leuchtanzeige 32 zu einer eine Betriebsbereitschaft signalisierenden Farbe umgeschaltet werden kann.

### Bezugszeichen

- 10: Werkzeugaufnahme
- 12: Kühlelement
- 14: Kühlbereich
- 16: Kontaktschalter
- 18: Wand
- 20: Radialrichtung
- 22: Kühlraum
- 24: Spannbereich
- 26: Kontaktspitze
- 28: Steuereinheit
- 30: Anzeigeeinheit
- 32: Leuchtanzeige
- 34: Kühlstation
- 36: Schrumpfspannabkühlvorrichtung
- 38: Kühlplatz
- 40: Einführrichtung
- 42: Unbetätigter Zustand
- 44: Betätigter Zustand
- 46: Verfahrensschritt
- 48: Verfahrensschritt
- 50: Verfahrensschritt
- 52: Verfahrensschritt
- 54: Verfahrensschritt
- 56: Verfahrensschritt
- 58: Verfahrensschritt
- 60: Verfahrensschritt
- 62: Verfahrensschritt
- 64: Verfahrensschritt

## Patentansprüche

1. Schrumpfspannabkühlvorrichtung (36) zu einer Kühlung von, insbesondere zuvor aufgeheizten, Werkzeugaufnahmen (10), mit zumindest einem Kühlelement (12), welches einen Kühlbereich (14) zu einer Herstellung eines wärmeleitenden Kontakts mit der zu kühlenden Werkzeugaufnahme (10) ausbildet, **dadurch gekennzeichnet, dass** das Kühlelement (12) einen Kontaktschalter (16) aufweist, welcher dazu vorgesehen ist, zumindest ein Einlagern, und insbesondere eine Präsenz und/oder ein Auslagern, der zu kühlenden Werkzeugaufnahme (10) in den Kühlbereich (14) zu detektieren.

2. Schrumpfspannabkühlvorrichtung (36) nach Anspruch 1, **dadurch gekennzeichnet, dass** der Kontaktschalter (16) innerhalb des Kühlbereichs (14) angeordnet ist.

3. Schrumpfspannabkühlvorrichtung (36) nach Anspruch 1 oder 2, **dadurch gekennzeichnet, dass** der Kontaktschalter (16) zumindest in einem unbetätigten Zustand (42) aus einer den Kühlbereich (14) begrenzenden Wand (18) des Kühlelements (12) zumindest teilweise herausragt.

4. Schrumpfspannabkühlvorrichtung (36) nach Anspruch 3, **dadurch gekennzeichnet, dass** der Kühlbereich (14) als ein zumindest in Radialrichtung (20) des Kühlelements (12) vollständig von dem Kühlelement (12) umschlossener Kühlraum (22) ausgebildet ist, welcher insbesondere dazu vorgesehen ist, einen Spannbereich (24) der als Warmschrumpffutter ausgebildeten Werkzeugaufnahme (10) zumindest zu einem Großteil, vorzugsweise vollständig aufzunehmen.

5. Schrumpfspannabkühlvorrichtung (36) nach Anspruch 3 oder 4, **dadurch gekennzeichnet, dass** eine aus der den Kühlbereich (14) begrenzenden Wand (18) des Kühlelements (12) herausragende Kontaktspitze (26) des Kontaktschalters (16) eine zumindest im Wesentlichen kalottenförmige Oberfläche aufweist.

6. Schrumpfspannabkühlvorrichtung (36) nach einem der vorhergehenden Ansprüche, **dadurch gekennzeichnet, dass** der Kontaktschalter (16) als ein mechanischer Schalter ausgebildet ist.

7. Schrumpfspannabkühlvorrichtung (36) nach einem der vorhergehenden Ansprüche, **dadurch gekennzeichnet, dass** der Kontaktschalter (16) als ein elastisch vorgespannter Druckschalter ausgebildet ist.

8. Schrumpfspannabkühlvorrichtung (36) nach einem der vorhergehenden Ansprüche, **dadurch gekennzeichnet, dass** der Kontaktschalter (16) zumindest eine den Kühlbereich (14) begrenzende Wand (18) des Kühlelements (12) in Radialrichtung (20) durchdringt.

9. Schrumpfspannabkühlvorrichtung (36) nach einem der vorhergehenden Ansprüche, **gekennzeichnet durch** eine Steuereinheit (28), welche zumindest dazu vorgesehen ist, ein zumindest die Einlagerung einer Werkzeugaufnahme (10) anzeigendes Einlagersignal des Kontaktschalters (16) zu erfassen.

10. Schrumpfspannabkühlvorrichtung (36) nach Anspruch 9, **dadurch gekennzeichnet, dass** die Steuereinheit (28) zumindest dazu vorgesehen ist, bei einem Empfang des Einlagersignals eine Zählung einer Kühlzeit zu starten.

11. Schrumpfspannabkühlvorrichtung (36) nach Anspruch 9 oder 10, **dadurch gekennzeichnet, dass** die Steuereinheit (28) zumindest dazu vorgesehen ist, bei einem Empfang des Einlagersignals ein Herunterzählen einer in der Steuereinheit (28), insbesondere für die jeweilige Werkzeugaufnahme (10), hinterlegten, Kühlzeit zu starten, und insbesondere die Herunterzählung der Kühlzeit an eine Anzeigeeinheit (30) zur visuellen Ausgabe der Herunterzählung der Kühlzeit zu übermitteln.

12. Schrumpfspannabkühlvorrichtung (36) nach einem der Ansprüche 9 bis 11, **dadurch gekennzeichnet, dass** die Steuereinheit (28) zumindest dazu vorgesehen ist, bei einem Empfang des Einlagersignals eine einen aktiven Kühlvorgang signalisierende Leuchtanzeige (32) zu schalten, insbesondere zu aktivieren und/oder farblich umzuschalten.

13. Schrumpfspannabkühlvorrichtung (36) nach Anspruch 12, **dadurch gekennzeichnet, dass** die Leuchtanzeige (32) dazu vorgesehen ist, zumindest den aktiven Kühlvorgang durch eine Farbumschaltung zu signalisieren.

14. Schrumpfspannabkühlvorrichtung (36) nach einem der Ansprüche 9 bis 13, **dadurch gekennzeichnet, dass** die Steuereinheit (28) zumindest dazu vorgesehen ist, bei einem Empfang des Einlagersignals eine Kühlfunktion des Kühlelements (12) zu aktivieren.

15. Schrumpfspannabkühlvorrichtung (36) nach Anspruch 11 und nach einem der Ansprüche 12 bis 14, **dadurch gekennzeichnet, dass** die Steuereinheit (28) zumindest dazu vorgesehen ist, nach einem Verstreichen der, insbesondere für die jeweilige Werkzeugaufnahme (10) hinterlegten, Kühlzeit die den aktiven Kühlvorgang signalisierende Leuchtanzeige (32) zu schalten, insbesondere zu deaktivieren und/oder farblich umzuschalten, und/oder die Kühlfunktion des Kühlelements (12) zu deaktivieren.

16. Kühlstation (34) für ein Schrumpfspanngerät, insbesondere Schrumpfspanngerät, mit einer Schrumpfspannabkühlvorrichtung (36) nach einem der vorhergehenden Ansprüche.

17. Verfahren zum Betrieb einer Schrumpfspannabkühlvorrichtung (36), insbesondere nach einem der Ansprüche 1 bis 15, mit zumindest einem Kühlelement (12), welches einen Kühlbereich (14) zu einer Herstellung eines wärmeleitenden Kontakts mit der zu kühlenden Werkzeugaufnahme (10) ausbildet, **dadurch gekennzeichnet, dass** das Kühlelement (12) einen Kontaktschalter (16) aufweist, mittels welchem zumindest ein Einlagern, und insbesondere eine Präsenz und/oder ein Auslagern, der zu kühlenden Werkzeugaufnahme (10) in den Kühlbereich (14) detektiert wird.

18. Verfahren nach Anspruch 17, **dadurch gekennzeichnet, dass** in Folge einer Detektion eines Einlagerns der zu kühlenden Werkzeugaufnahme (10) in den Kühlbereich (14) durch den Kontaktschalter (16) zumindest ein Herunterzählen einer, insbesondere für die jeweilige Werkzeugaufnahme (10) hinterlegten, Kühlzeit gestartet wird.
